# EUROPEAN PATENT SPECIFICATION

(11) **EP 3 090 606 B1**
(45) Date of publication and mention of the grant of the patent: **25.04.2018**
(21) Application number: 15793807.7
(22) Date of filing: 11.11.2015
(51) Int. Cl.: H05B 33/08, H05B 37/02

(54) **PROXIMITY BASED LIGHTING CONTROL**
NÄHERUNGSBASIERTE BELEUCHTUNGSSTEUERUNG
COMMANDE D'ÉCLAIRAGE À BASE DE PROXIMITÉ

(30) Priority: 25.11.2014 EP 14194705
(43) Date of publication of application: 09.11.2016
(73) Proprietor: Philips Lighting Holding B.V., 5656 AE Eindhoven (NL)
(72) Inventor: MEERBEEK, Berent Willem, NL-5656 AE Eindhoven (NL); VAN DE SLUIS, Bartel Marinus, NL-5656 AE Eindhoven (NL); CUPPEN, Roel Peter Geert, NL-5656 AE Eindhoven (NL)
(74) Representative: Verweij, Petronella Daniëlle
(86) International application number: PCT/EP2015/076276
(87) International publication number: WO 2016/083126

(56) References cited:
- US-A1- 2011 234 366
- US-A1- 2012 312 676
- US-A1- 2013 194 030
- US-A1- 2013 307 610

## Description

### FIELD OF THE INVENTION

The invention relates to a system and a method for controlling a lighting device by a control device. The invention further relates to a lighting device and control device for use in the system.

### BACKGROUND OF THE INVENTION

Future and current home and professional environments will contain a large number of controllable lighting devices for creation of ambient, atmosphere, accent or task lighting. These lighting devices can be controlled individually or in groups via a user interface of a smart device (e.g. a smartphone or a tablet pc) and use wireless communication technologies like Bluetooth or ZigBee to communicate with the smart devices. However, the mapping of light scenes and/or colours to lighting devices becomes complex when the amount of lighting devices increases. If the smart device is configured to control a plurality of lighting devices, the user first needs to select the lighting device, or a group of lighting devices, on the user interface, whereafter the user needs to select the light scene on the user interface, and only then is the user able to adjust the light output of the one or more lighting device. This illustrates the need in the art for a simpler and more intuitive way of lighting control, especially in an environment wherein a plurality of lighting devices needs to be controlled.

Patent application WO2008059411(A1) solves this problem with a control device for copying and pasting light scenes from one lighting device to another. The user may point the control device to a light source, select it and 'drag' its light scene to a further lighting device, thereby adjusting the light scene of the further lighting device based on the selected light scene. This invention simplifies lighting control, but further options maybe possible for further improvement of lighting control.

Patent application US 20120312676 A1 relates to a vehicle proximity switch. The switch includes a proximity sensor, such as a capacitive sensor, installed in a vehicle and providing a sense activation field. Also included is sense control circuitry processing the activation field to sense user activation of the switch by comparing the activation field to a threshold. The switch further includes sensitivity control circuitry learning a user sensitivity based on user activation of a sensor and controlling the sensitivity of one or more proximity switches.

Patent application US 20130307610 A1 relates to a method of activating a proximity switch. The method of activating the proximity switch includes the step of sensing a signal associated with a proximity sensor and sensing a dynamic parameter (such as the speed of the vehicle, the road conditions, etc.). The method also includes the step of tuning a threshold value based on the sensed dynamic parameter. The method further includes the step of activating the switch based on the signal and the threshold value. The switch is arranged for sensing user activation.

Patent Application US 20110234366 A1 discloses a wireless controller that sends a probe message to one or more lighting devices; each lighting device receives the probe message, obtains information in respect of its relative position with respect to the wireless controller, determines a response time based on its relative position information: detects response signals from other devices before expiration of the response time and decides whether to send or not to send its response signal. The wireless controller receives response signals sent by the devices after the comparison of the relative position information of each device with respect to the wireless controller, and selects a (closest) target device from the devices.

### SUMMARY OF THE INVENTION

It is an object of the present invention to provide further control options for controlling a lighting device by a control device.

According to a first aspect of the invention the object is achieved by a lighting system for controlling a lighting device by a control device. The lighting system comprises:
- the control device comprising a first user interface arranged for receiving a first user input, wherein the first user input is related to an adjustment of a control parameter of the lighting device,
- a proximity detector arranged for detecting proximity between the control device and the lighting device,
- the lighting device comprising at least one light source, and
- a processor arranged for adjusting the control parameter of the lighting device based on the first user input if the control device 102 is within a predefined proximity 114 of the lighting device within a predefined period of time after receiving the first user input.

The lighting system provides the advantage that that it enables the user to control a lighting device by bringing the control device in proximity of the lighting device. This invention allows the user to control the lighting device after providing the first user input at the first user interface of the control device. This may be advantageous because it allows the user to select a light setting for one or more lighting devices, whereafter the control parameters of the one or more lighting devices are adjusted when the control device, and therewith the user, is in proximity of the lighting device. This results in a simple and intuitive way of controlling one or more lighting devices, and it removes the need for the user to indicate the target lighting device to be controlled on the control device. The proximity between the control device and the lighting device may be detected for a predefined period of time, which provides the user a time window wherein the control parameter of the lighting device may be adjusted. Allowing lighting control within the provided time window may be advantageous because it will not trigger the adjustment of the control parameter whenever the user enters the proximity of the lighting device outside the time window.

In an embodiment of the system the proximity detector is further arranged for determining a distance between the control device and the lighting device. In this embodiment the processor is further arranged for adjusting the control parameter of the lighting device based on the determined distance. This may be advantageous because it provides the user more control options for adjusting the control parameter of the lighting device. It also allows the user to adjust a plurality of lighting devices by moving the control device towards or away from each lighting device, thereby providing an intuitive way of lighting control. In a further embodiment, the processor is able to adjust the control parameter of the lighting device only if the control device is within a predefined proximity of the lighting device. This creates an area wherein the control parameter of the lighting device may be adjusted. The advantage of allowing lighting control only within the created area is that it will not trigger the adjustment of the control parameter whenever the control device is outside the area. The predefined proximity may depend on the type of detector that is comprised in the system. Alternatively, a proximity detector with an adjustable proximity detection range may be comprised in the system. An advantage of a proximity detector with an adjustable proximity detection range is that it may allow a user and/or the system to adjust the range, thereby allowing utilization of one proximity detector for different configurations of the lighting system. In a further embodiment the processor is further arranged for determining a duration wherein the distance is within a predefined range. In this embodiment, the adjustment of the control parameter of the lighting device is further based on the duration. This may be advantageous because provides the user more control of the lighting device and it allows the user to intuitively adjust the control parameter based on both the distance and the duration wherein the control device is in proximity of the lighting device.

In an embodiment of the system the lighting device comprises a second user interface arranged for receiving a second user input within the predefined period of time. The second user interface may for example comprise a touch-sensitive device such as a touchpad or a touchscreen, an audio sensor such as a microphone, a motion sensor such as an accelerometer, magnetometer and/or a gyroscope for detecting gestures and/or one or more buttons for receiving the second user input. In this embodiment the processor is further arranged for adjusting the control parameter of the lighting device based on the second user input. The advantage of this embodiment is that it enables the user to adjust the control parameter of the lighting device via interaction with the lighting device (e.g. by providing touch input), thereby offering more control options.

In an embodiment of the system the control device comprises a motion detector arranged for detecting a motion of the control device, and therewith a motion of the user. In this embodiment the processor is further arranged for adjusting the control parameter of the lighting device based on the detected motion. An advantage of the implementation of a motion sensor in the control device is that it provides further control options for the user. It allows the user to, for example, adjust the control parameter of a plurality of lighting devices with a single movement.

In an embodiment of the system the first user interface is further arranged for receiving a further user input related to adjusting the predefined period of time, and the processor is further arranged for setting the predefined period of time based on the further user input. This may be advantageous because it allows the user to determine the duration wherein the lighting device is controllable.

In an embodiment of the system the proximity detector comprises a position detector arranged for detecting positional information of the control device and the lighting device, thereby determining the proximity between the control device and the lighting device. It may be advantageous to have positional information about the lighting device and the control device in an environment, because this may allow further control options.

In an embodiment of the system the control device further comprises the proximity detector. In this embodiment the processor may be comprised in a further device and the control device may transmit the proximity detection reading to the processor which determines the adjustment of the control parameter of the lighting device. In another embodiment, the control device further comprises the processor. In this embodiment the proximity detector may be comprised in a further device comprising means for sending the proximity detection reading to the processor. It would be advantageous to implement the proximity detector and/or the processor in the control device because this may reduce the amount of hardware devices, thereby reducing the cost of the lighting system. It may be further advantageous if the control device is a consumer device that is already equipped with the processor and/or a proximity detection means (e.g. a camera or near field communication technology).

In an embodiment the lighting system further comprises the processor. In this embodiment, the proximity detector may be comprised in another device (e.g. in the control device) comprising means for sending the proximity detection reading to the processor. In another embodiment, the lighting device comprises the proximity detector and the processor. This enables the lighting device to determine the proximity of the control device within the predefined period of time. It would be advantageous to implement the proximity detector and/or the processor in the lighting device because this may reduce the amount of hardware devices, thereby reducing the cost of the lighting system.

According to a second aspect of the present invention the object is achieved by a method of controlling a lighting device by a control device, the method comprising the steps of:
- receiving a first user input, wherein the first user input is related to an adjustment of a control parameter of the lighting device,
- detecting proximity between the control device and the lighting device, and
- adjusting the control parameter of the lighting device based on the first user input if the control device 102 is within a predefined proximity 114 of the lighting device within a predefined period of time after receiving the first user input.

Further are disclosed a control device and a lighting device for use in the lighting system as described above.

### BRIEF DESCRIPTION OF THE DRAWINGS

The above, as well as additional objects, features and advantages of the disclosed system, devices and method, will be better understood through the following illustrative and non-limiting detailed description of embodiments of devices and methods, with reference to the appended drawings, in which:
Fig. 1 shows schematically an embodiment of a lighting system according to the invention for controlling a lighting device by a control device;
Fig. 2 shows schematically an embodiment of the lighting system according to the invention for controlling the lighting device by the control device based on the distance between both;
Fig. 3 shows schematically an embodiment of the lighting system according to the invention for controlling the lighting device by detecting motion of the control device;
Fig. 4 shows schematically an embodiment of the lighting system according to the invention for controlling the lighting device by receiving a user input at the lighting device;
Fig. 5 shows schematically and exemplary a method of controlling a lighting device by a control device;

### DETAILED DESCRIPTION OF EMBODIMENTS

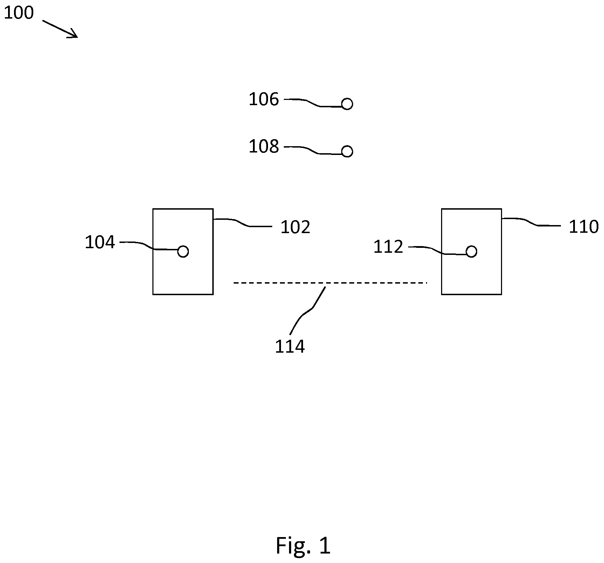

Fig. 1 shows schematically an embodiment of a lighting system 100 according to the invention for controlling a lighting device 110 by a control device 102. The lighting system 100 comprises the control device 102 comprising a first user interface 104 arranged for receiving a first user input. The lighting system 100 further comprises a proximity detector 106 arranged for detecting proximity 114 between the control device 102 and the lighting device 110. The lighting system 100 further comprises the lighting device 110 comprising at least one light source 112. The lighting system 100 further comprises a processor 108 arranged for adjusting a control parameter of the lighting device 110 based on the first user input if the proximity 114 is detected within a predefined period of time after receiving the first user input (e.g. within 5 minutes). In the embodiment of Fig. 1 the control device 102 may be operated by a user (not shown). The control device 102 may be any suitable control device 102 for controlling a lighting device 110. The type of control device 102 may be for example a smart device (e.g. a smartphone or a tablet pc), a wearable device (e.g. a watch, a smart ring, smart glasses, etc.) or any other remote control device. The type of control device 102 may be selected in relation to the context wherein the control device 102 will be used. The envisioned interaction options with the lighting device 110 and the characteristics of the lighting device 110 may determine the selection of a specific control device 102. For example, the lighting device 110 may be an LED-strip comprising a plurality of LED light sources requiring control options for changing the colour of each of the plurality of LED light sources, which may require different control options than for example a ceiling-mounted lighting device comprising one single light source, which may require control options for turning the light source on and off. The intended use of the lighting device 110 and the control device 102 may also influence the type of proximity detector 106, and the detection range of the proximity detector 106 may differ per embodiment of the lighting system 100. For example, the lighting system 100 may comprise a matrix of LED light sources, wherein close proximity detection may be required for each LED in the matrix, while in a lighting system 100 where a desk lamp is controlled by the control device 102 the precision of the proximity may be less important. In an exemplary embodiment the lighting system 100 may comprise a plurality of controllable lighting devices 110, wherein each of the plurality of controllable lighting devices 110 comprises a processor 108 arranged for adjusting a control parameter of its lighting device 110. The lighting system 100 may further comprise the control device 102 (e.g. a smartphone) comprising: 1. a user interface allowing a user to select a colour and 2. a proximity detector 106 for detecting the proximity 114 of the lighting device 110 within a predefined period of time after receiving the colour selection. In this embodiment, the user may for example select the colour red via an application that runs on the smartphone, thereby starting the predefined period of time wherein the proximity detector 106 may detect the proximity 114 between the control device 102 and one of the plurality of lighting devices 110. The predefined period of time may for example be one minute, thereby allowing the user to adjust the colour of the plurality of lighting devices during that minute. If one of the plurality of lighting devices 110 is within the proximity 114 of the control device 102, a control command is send to the processor 108 of the one of the plurality of lighting devices 110, which adjusts the colour of the light of the one of the plurality of lighting devices 110.

The control device 102 comprises the first user interface 104 arranged for receiving the first user input. The first user input may be related to adjusting a control parameter of the lighting device 110. For example, the first user input may be related to: turning at least one light source 112 of the lighting device 110 on or off, adjusting the colour and/or the brightness of at least one light source 112 of the lighting device 110, changing the orientation of the lighting device 110 (e.g. rotation or movement of the lighting device 110), adjusting the shape of the light beam of the lighting device 110, setting a dynamic light scene (e.g. a sunset, fireworks, etc.) and/or adjusting any other control parameter of the lighting device 110. The first user interface 104 may comprise, for example, a touch-sensitive device, an audio sensor, a motion sensor and/or one or more buttons for receiving the first user input. The touch-sensitive device may be, for example, a touchpad or a touchscreen. This touch-sensitive device and/or the one or more buttons, may enable the user to perform any one of the abovementioned first user input actions. A further type of first user input may comprise a movement of the control device 102, allowing the user to provide the first user input via, for example, waving the control device 102, thereby for example indicating that the orientation of the lighting device 110 needs to be adjusted. A further type of first user input may comprise a voice command (e.g. "colour to green") or a further sound command (e.g. the sound of clapping hands) received by an audio sensor which may be comprised in the control device 102. In a further embodiment, the first user interface 104 may be further arranged for receiving a confirmation command from the user, the confirmation command indicating a confirmation of an adjusted control parameter. This feature may be advantageous because it allows the user to stop the predefined period of time for a specific lighting device 110, thereby being no longer able to adjust the control parameter of that specific lighting device 110, while possibly still being able to adjust a control parameter of a further lighting device 110.

The control device 102 may further comprise a communication unit arranged for communicating information to the user. The communication unit (e.g. a display) may be arranged for displaying an indication of the predefined period of time. The communication unit may be further arranged for displaying an indication of the remaining time of the predefined period of time (e.g. an hourglass, a countdown sequence, etc.) after the predefined period of time has been initiated. The communication unit may further indicate if the control device 102 is within proximity 114 of the lighting device 110. The communication unit may further provide an on-screen instruction to indicate when the control parameter of the lighting device 110 may be adjusted. The communication unit may further provide information about how to connect a lighting device 110 to the lighting system 100 and how the lighting device 110 may be controlled. The advantage of the implementation of the communication unit is that it may support the user in the process of commissioning and controlling the lighting device 110.

The proximity detector 106 is arranged for detecting proximity 114 between the control device 102 and the lighting device 110. The proximity detector 106 may communicate the detected proximity to the processor 108, whereafter the processor 108 determines to adjust a control parameter of the lighting device 110 based on the first user input if the control device 102 is within the proximity 114 of the lighting device 110. The proximity 114 may be as large that it covers a complete room, or as small that it covers a few centimeters. The range of the proximity 114 wherein the control parameter of the lighting device 110 may be adjusted may depend on the intended use of the lighting system 100. For example, if the lighting device 110 is a lamp in a lamp post the proximity 114 may be such that it creates a large control area on ground level, while for an LED strip with individual controllable LEDs the proximity 114 may be less than an inch. In another exemplary embodiment the proximity detector 106 may be arranged for determining if the control device 102 and the lighting device 110 are connected to the same network. This allows the proximity detector 106 to determine the proximity 114 between the lighting device 110 and the control device 102.

In a further embodiment the proximity detector 106 may be arranged for determining proximity 114 between the control device 102 and the lighting device 110 before the first user input is received. This embodiment may be advantageous because establishing proximity 114 before the first user input is received may allow the processor 108 to check whether the proximity 114 is still established after receiving the first user input. In this embodiment, the proximity detector 106 may for example determine that the control device 102 is in the same network (e.g. a Wi-Fi network, a home network) as the lighting device 110 and/or determine if the control device 102 and the lighting device 110 are associated with the same user account. This information may be used by the processor 108 to establish a connection between the lighting device 110 and the control device 102 prior to receiving the first user input.

In an embodiment the proximity detector 106 may be located in the control device 102. The proximity detector 106 may for example detect the presence of a lighting device 110 via a camera that is comprised in the control device 102. The camera may be further arranged for detecting coded light (i.e. decode a coded light message embedded in light emitted by the lighting device 110), thereby allowing the identification of the lighting device 110. If the control device 102 is within the proximity 114, the control device 102 may send a control command to the lighting device 110 within the predetermined period of time in order to adjust the control parameter of the lighting device 110. In another embodiment the proximity detector 106 may be located in the lighting device 110. In this embodiment the lighting device 110 may receive the first user input from the control device 102, whereafter the proximity detector 106 may detect the proximity 114 between the control device 102 and the lighting device 110 for the predefined period of time. This allows the user to bring the control device 102 within the proximity 114 of the lighting device 110 within the predefined period of time (e.g. within 30 seconds). In another embodiment, the proximity detector 106 may be for example a touch-sensitive device located in the lighting device, wherein the proximity detector 106 determines if the control device 102 is touching the lighting device 110 within the predefined period of time, thereby determining proximity between the control device 102 and the lighting device 110 and allowing the processor 108 to adjust the control parameter of the lighting device 110.

Various proximity detection methods that are known in the art may be used, for example radio frequency identification (RFID) or near field communication (NFC). A choice for an appropriate proximity detection method may depend on: the required detection range of the proximity detector and/or the use of active or passive radio frequency (RF) detectable tags (i.e. battery powered or not). An advantage of these RF based methods is that they allow the user to attach an RF tag to a device, thereby allowing the device to be detectable by proximity detector 106. For example, the lighting device 110 and/or the control device 102 may be equipped with an RF tag, thereby becoming detectable by the RF proximity detector. Another method for proximity detection known in the art is position determination via triangulation or trilateration. The proximity detector 106 may comprise a position detector arranged for detecting positional information of the control device 102 and the lighting device 110, thereby determining the proximity 114 between the control device 102 and the lighting device 110. The position detector may use, for example, an indoor proximity system, wherein the system uses for example RF signals and trilateration or triangulation to determine the position of the control device 102 and the lighting device 110. For outdoor purposes the position detector may use a global positioning system for determining the location of the control device 102 and the lighting device 110. Using an existing location system or one or more depth cameras to detect the location and communicate location information to the processor 108 in the lighting system 100 may be advantageous because this may reduce the effort to implement a proximity detector 106 in the lighting device 110, thereby possibly reducing the costs of the lighting system 100.

The lighting device 110 of the lighting system 100 may be any type of controllable lighting device 110 (e.g. an LED strip, a luminaire, an LED matrix, a smart light bulb, etc.) with means to communicate with a control device 102 and optionally with a (remote) proximity detector 106. Various wired and wireless communication technologies that are known in the art may be used, for example Bluetooth, Wi-Fi or ZigBee. A specific communication technology may be selected based on the communication capabilities of the control device 102, the type of lighting device 110 and the type of proximity detector 106, the power consumption of the communication driver for the wireless communication technology and/or the communication range of the wireless signals. Many consumer control devices 102 (e.g. smartphones) and lighting devices 110 (e.g. Philips Hue) today are already equipped with one or more wireless communication technologies, which may be advantageous because this may reduce the effort to create a communication link between the control device 102 and the lighting device 110.

The processor 108 of the lighting system 100 is arranged for adjusting the control parameter of the lighting device 110 based on the first user input and on the detected proximity 114 between the control device 102 and the lighting device 110. The processor 108 uses the first user input as an adjustment control command which is only executed if the control device 102 is within the proximity 114 of the lighting device 110 within the predefined period of time. Depending on the intended use of the lighting system 100, the processor 108 may be located in the control device 102, in the lighting device 110 or in a further device. In the embodiment wherein the processor 108 is located in the control device 102, the processor 108 receives the first user input from the first user interface 104 and proximity information from the proximity detector 106, whereafter the processor 108 sends a control command to the lighting device 110 to adjust the control parameter of the lighting device 110. In this embodiment, the control device 102 may be, for example, a smart watch and the proximity detector 106 may be an indoor proximity system that uses RF beacons to determine the locations of the smart watch and the lighting device 110. The processor 108 of the smart watch receives the first user input via the user interface of the smart watch and it receives the proximity information from the indoor proximity system. The processor 108 determines if the lighting device 110 and the smart watch are within each other's proximity 114, and, if they are, the control command related to adjusting the control parameter of the lighting device 110 is sent to the lighting device 110. In the embodiment wherein the processor 108 is located in the lighting device 110, the processor 108 receives the first user input from the control device 102 and the information from the proximity detector 106, whereafter the processor 108 determines how to adjust the control parameter of the lighting device 110. In this embodiment the control device 102 may be, for example, a remote control device 102 comprising a user interface comprising a colour wheel arranged for receiving the first user input, a transmitter arranged for transmitting the first user input and a detectable RFID tag. In this example, the lighting device 110 comprises an RFID transceiver arranged for transmitting an RF signal and for receiving the transmitted RF signal after it has been backscattered by the RFID tag, thereby enabling the proximity detector 106 to detect the proximity between the remote control device 102 and the lighting device 110. The processor 108 of the lighting device 110 receives the first user input from the remote control device 102 and the proximity information from the proximity detector 106 and determines, if the remote control device 102 is within proximity 114 of the lighting device 110, to adjust the control parameter of the lighting device 110.

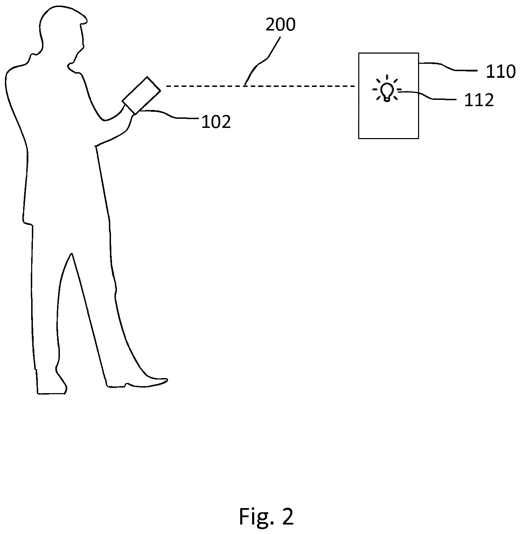

Fig. 2 shows schematically an embodiment of the lighting system 100 according to the invention for controlling the lighting device 110 by the control device 102 based on the distance 200 between the control device 102 and the lighting device 110. In this embodiment, the processor 108 is further arranged for adjusting the control parameter within the predefined period of time based on the detected distance 200. Various distance measuring methods that are known in the art may be used. Distance information can be acquired through for example measuring the received signal strength (RSS), wherein the distance is determined based on an RF signal backscattering from a receiving tag, or through time-of-flight (TOF), wherein the distance is determined based on the time between sending and receiving the RF signal. This embodiment provides further control options for the user. The user may, for example, control the brightness of a plurality of lighting devices 110 (e.g. ceiling-mounted TLEDs) by moving the control device 102 towards or away from each of the plurality of lighting device 110, thereby allowing the user to control the lighting devices 110 intuitively. Another example is a lighting system 100 comprising a controllable LED wall (an LED matrix), wherein the user is able to control for example the colour of each individual LED based on the distance 200 between the control device 102 and each LED, allowing the user to dynamically create a light scene for the LED wall. In a further embodiment, the processor 108 is able to adjust the control parameter of the lighting device 110 only if the control device is within a predefined proximity of the lighting device. This creates an area wherein the control parameter of the lighting device 110 may be adjusted. A proximity detector 106 with an adjustable proximity detection range may be comprised in the system. An advantage of a proximity detector 106 with an adjustable proximity detection range is that it may allow a user and/or the system to adjust the range, thereby allowing utilization of one proximity detector 106 for different configurations of the lighting system 100.

In an additional or alternative embodiment of the lighting system 100 shown in Fig. 2 the processor 108 is further arranged for determining a duration wherein the determined distance 200 is within a predefined range, and wherein the control parameter of the lighting device 110 is adjusted based on the determined duration. This allows the user, for example, to adjust the brightness of the lighting device 110 by increasing or decreasing the duration wherein the control device 102 is in proximity 114 of the lighting device 110. This embodiment may be advantageous for controlling a plurality of lighting devices 110 (e.g. an LED matrix), thereby providing the user a simple and intuitive way of adjusting the light sources.

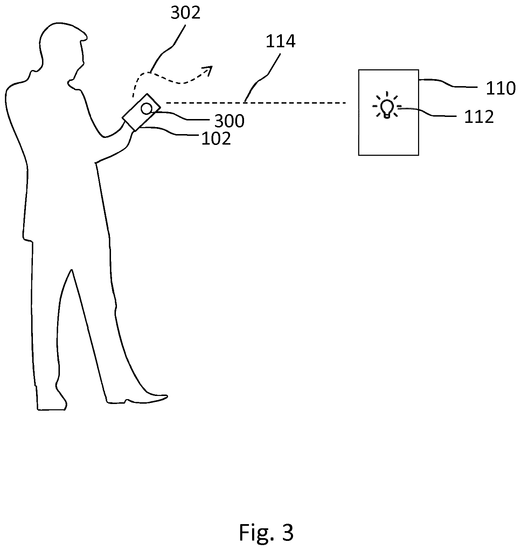

Fig. 3 shows schematically an embodiment of the lighting system 100 according to the invention for controlling the lighting device 110 by detecting motion of the control device 102. In this embodiment the control device 102 further comprises a motion detector 300 arranged for detecting motion 302 of the control device 102. The motion detector 300 may comprise, for example, an accelerometer, a gyroscope and/or a magnetometer, whose output may be read by the control device 102. The control device 102 may be further arranged for communicating the detected motion 302 to the processor 108, which is further arranged for adjusting the control parameter of the lighting device 110 within the predefined period of time based on the detected motion 302 if the control device 102 is within the proximity 114 of the lighting device 110. The detected motion 302 may be associated with a command of a group of commands stored in a database. The database may be comprised in the control device 102, in the processor 108 or it may be stored on a remote server accessible via, for example, the internet. In an exemplary embodiment the control device 102 may be a remote control device 102 (e.g. a smart wand) and the motion detector 300 may comprise a motion sensor (e.g. an accelerometer and/or a gyroscope), and the detected motion 302 may be a movement of the control device 102 and therewith also a movement of the user (e.g. a gesture). The processor 108 may be further arranged for identifying the movement and for adjusting the control parameter based on the movement. The movement may be, for example, a circular movement with the remote control device 102, thereby indicating, for example, that the lighting device 110 should cycle the colour of the at least one light source 112 through its colour library. In another exemplary embodiment the control device 102 may be a wrist-worn device (e.g. a smart watch) comprising the motion detector 300. This may allow the user to control, for example, the brightness of a lighting device 110 simply by rotating the wrist.

In an embodiment, the first user interface 104 is further arranged for receiving a further user input for adjusting the predefined period of time. The processor 108 is further arranged for setting the predefined period of time based on the further user input. This allows the user to define the period of time wherein the lighting device 110 is controllable after the first user input is received. This may especially be advantageous in a lighting system 100 with a plurality of lighting devices 110, thereby possibly decreasing the chance that lighting devices 110 are controlled unintendedly. Optionally, the first user interface 104 may be further arranged for receiving a user input for adjusting (e.g. prolong or shorten) the remaining time period while controlling the lighting device 110. This may be advantageous if a user has not enough time to adjust the lighting device 110. In an alternative embodiment the predefined period of time may be determined automatically, based on for example the lighting infrastructure (e.g. shorter if more lighting devices 110 are available) or based on the history of a particular user (e.g. increase the period of time for users that needed more time in the past). In a further embodiment the first user interface 104 may be further arranged for receiving another user input for adjusting the proximity range wherein the control device 102 may control the lighting device 110. This allows the user to increase the range of the proximity detector 106 (e.g. covering the complete room) or to decrease the range of the proximity detector 106 (e.g. to a few inches). Additionally or alternatively, the proximity range may be determined automatically, based on for example the amount of users using the lighting system 100 (e.g. a smaller area if more users are using the system) or the lighting infrastructure (e.g. a smaller area if more lighting device 110 are available).

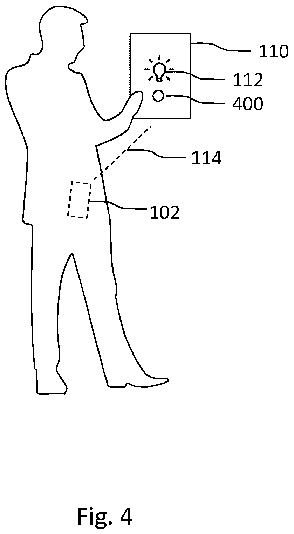

Fig. 4 shows schematically an embodiment of the lighting system 100 according to the invention for controlling the lighting device 110 by receiving a user input at the lighting device 110. In this embodiment, the lighting device 110 comprises a second user interface 400 arranged for receiving a second user input. The processor 108, comprised in the lighting device 110, is further arranged for adjusting the control parameter within the predefined period of time based on the second user input if the control device 102 is within proximity 114 of the lighting device 110. The second user interface 400 may comprise, for example, a touch-sensitive device, an audio sensor, a motion sensor and/or one or more buttons for receiving the second user input. In an exemplary embodiment the second user interface 400 may comprise a touch-sensitive light distribution element (e.g. a touch-sensitive lamp shade) allowing the user, after providing the first user input at the control device 102 related to adjusting for example the colour, to control the colour of at least one light source 112 of the lighting device 110 by touching the touch-sensitive light distribution element. The adjustment of the at least one light source 112 may be adjusted based on multiple factors, for example: duration of touch, intensity of touch, multi-touch, etc. This may allow the user to, for example, influence the colour of the at least one light source 112 based on the duration wherein the user touches the touch-sensitive light distribution element, and to influence the brightness of the at least one light source 112 based on the intensity (e.g. amount of pressure of the user's touch) of the user's touch. A further type of second user input may comprise a voice command or a further sound command (e.g. the tapping of a control device nearby the lighting device) received by an audio sensor comprised in the lighting device 110.

In an embodiment the lighting system further comprises an intermediate communication device. In this embodiment, the lighting device 110 may be controlled by the control device 102 through the intermediate communication device. The intermediate communication device (e.g. a bridge) may comprise a transceiver arranged for communicating with the control device 102 and the lighting device 110. The intermediate communication device may further comprise the processor 108, which would be advantageous in a lighting system wherein an existing lighting device 110 (e.g. a wireless controllable lamp) is controlled via a control device 102 (e.g. a smartphone) comprising the proximity detector 106, because this allows the user to extend the control of an existing system with the control as described in this disclosure. The intermediate communication device may also be part of a networked system (e.g. a Philips Hue lighting network, a DALI lighting network or a home automation network). The intermediate communication device may further comprise the proximity detector 106 (e.g. proximity detection via an indoor positioning system) thereby possibly utilizing features of an existing system to establish the functionality of the lighting system.

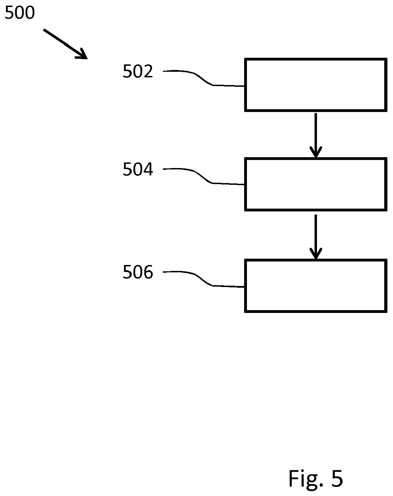

Fig. 5 shows schematically and exemplary a method 500 of controlling a lighting device 110 by a control device 102. The method 500 comprises the following steps:
- receiving 502 a first user input,
- detecting 504 proximity between the control device 102 and the lighting device 110, and
- adjusting 506 a control parameter of the lighting device 110 based on the first user input if the proximity 114 is detected within a predefined period of time after receiving the first user input.

In a further embodiment the method of Fig. 5 may further comprise the steps of determining a distance 200 between the control device 102 and the lighting device 110 and adjusting the control parameter of the lighting device 110 based on the determined distance 200. As a result, the distance 200 between the control device 102 and the lighting device 110 influences the adjustment of the control parameter. In a further embodiment the method may further comprise the steps of determining a duration wherein the determined distance 200 is within a predefined range and adjusting the control parameter of the lighting device 110 based on the duration.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or processing unit. In the device claim enumerating several means, several of these means may be embodied by one and the same item of hardware. The mere fact that certain measures are recited in mutually different dependent claims does not indicate that a combination of these measures cannot be used to advantage.

## Claims

1. A lighting system (100) for controlling a lighting device (110) by a control device (102), the lighting system (100) comprising:
- the control device (102) comprising a first user interface (104) arranged for receiving a first user input, wherein the first user input is related to an adjustment of a control parameter of the lighting device (110), wherein the control parameter is a colour, brightness and/or a shape of a beam of the light of the lighting device and/or an orientation of the lighting device,
- the lighting device (110) comprising at least one light source (112),
- a proximity detector (106) arranged for detecting proximity (114) between the control device (102) and the lighting device (110), and
**characterized by**:
- a processor (108) arranged for adjusting the control parameter of the lighting device (110) based on the first user input only when the control device (102) has been brought within a predefined proximity range (114) of the lighting device (110) after receiving the user input within a predefined period of time after receiving the first user input, the predefined period of time being such that it allows a user to bring the control device within the predefined proximity range (114).

2. The lighting system (100) of claim 1, wherein the proximity detector (106) is further arranged for determining a distance (200) between the control device (102) and the lighting device (110), and wherein the processor (108) is further arranged for adjusting the control parameter of the lighting device (110) based on the determined distance (200).

3. The lighting system (100) of claim 2, wherein the processor (108) is further arranged for determining a duration wherein the determined distance (200) is within a predefined range, and for adjusting the control parameter of the lighting device (110) based on the duration.

4. The lighting system (100) of claim 1, wherein the lighting device (110) comprises a second user interface (400) arranged for receiving a second user input within the predefined period of time, and wherein the processor (108) is further arranged for adjusting the control parameter of the lighting device (110) based on the second user input.

5. The lighting system (100) of claim 4, wherein the second user interface (400) comprises at least one of the group comprising a touch-sensitive device, an audio sensor, a motion sensor and one or more buttons for receiving the second user input.

6. The lighting system (100) of any one of the preceding claims, wherein the control device (102) further comprises a motion detector (300) arranged for detecting motion (302) of the control device (102), and wherein the processor (108) is further arranged for adjusting the parameter of the lighting device (110) based on the detected motion (302).

7. The lighting system (100) of any one of the preceding claims, wherein the first user interface (104) is further arranged for receiving a further user input for adjusting the predefined period of time, and wherein the processor (108) is further arranged for setting the predefined period of time based on the further user input.

8. The lighting system (100) of any one of the preceding claims, wherein the proximity detector (106) comprises a position detector arranged for detecting positional information of the control device (102) and the lighting device (110), thereby determining the proximity (114) between the control device (102) and the lighting device (110).

9. The lighting system (100) of any one of the claims 1 to 8, wherein the control device (102) further comprises the proximity detector (106).

10. The lighting system (100) of any one of the claims 1 to 9, wherein the control device (102) further comprises the processor (108).

11. The lighting system (100) of any one of the claims 1 to 9, wherein the lighting device (110) further comprises the processor (108).

12. The lighting system (100) of any one of the claims 1 to 8, wherein the lighting device (110) comprises the proximity detector (106) and the processor (108).

13. A method (500) of controlling a lighting device (110) by a control device (102), the method (500) comprising the steps of:
- receiving (502) a first user input, wherein the first user input is related to an adjustment of a control parameter of the lighting device (110), wherein the control parameter is a colour, brightness and/or a shape of a beam of the light of the lighting device and/or an orientation of the lighting device,
- detecting (504) proximity between the control device (102) and the lighting device (110), and
**characterized by**:
- adjusting (506) the control parameter of the lighting device (110) based on the first user input only when the control device (102) has been brought within a predefined proximity range (114) of the lighting device (110) after receiving the user input within a predefined period of time after receiving the first user input, the predefined period of time being such that it allows a user to bring the control device within the predefined proximity range (114).

## Patentansprüche

1. Beleuchtungssystem (100) zur Steuerung einer Beleuchtungsvorrichtung (110) durch eine Steuervorrichtung (102), wobei das Beleuchtungssystem (100) Folgendes umfasst:
- die Steuerungsvorrichtung (102), die eine erste Benutzerschnittstelle (104) umfasst, die zum Empfangen einer ersten Benutzereingabe angeordnet ist, wobei sich die erste Benutzereingabe auf eine Einstellung eines Steuerparameters der Beleuchtungsvorrichtung (110) bezieht, wobei der Steuerparameter eine Farbe, Helligkeit und/oder eine Form eines Lichtstrahls der Beleuchtungsvorrichtung und/oder eine Ausrichtung der Beleuchtungsvorrichtung ist,
- die Beleuchtungsvorrichtung (110), die mindestens eine Lichtquelle (112) umfasst,
- einen Näherungsdetektor (106), der zur Erfassung einer Näherung (114) zwischen der Steuerungsvorrichtung (102) und der Beleuchtungsvorrichtung (110) angeordnet ist, und
**gekennzeichnet ist durch**:
- einen Prozessor (108), der zur Einstellung des Steuerparameters der Beleuchtungsvorrichtung (110) basierend auf der ersten Benutzereingabe nur dann angeordnet ist, wenn die Steuervorrichtung (102) innerhalb einer vordefinierten Zeitspanne nach Empfangen der ersten Benutzereingabe innerhalb eines vordefinierten Näherungsbereiches (114) der Beleuchtungsvorrichtung (110) nach Empfangen der Benutzereingabe gebracht wurde, wobei die vordefinierte Zeitspanne so bemessen ist, dass ein Benutzer die Steuervorrichtung innerhalb des vordefinierten Näherungsbereiches (114) bringen kann.

2. Beleuchtungssystem (100) nach Anspruch 1, wobei der Näherungsdetektor (106) weiter zur Bestimmung eines Abstands (200) zwischen der Steuervorrichtung (102) und der Beleuchtungsvorrichtung (110) angeordnet ist, und wobei der Prozessor (108) weiter zur Einstellung des Steuerparameters der Beleuchtungsvorrichtung (110) basierend auf dem bestimmten Abstand (200) angeordnet ist.

3. Beleuchtungssystem (100) nach Anspruch 2, wobei der Prozessor (108) weiter zur Bestimmung einer Dauer, in der die bestimmte Entfernung (200) innerhalb eines vordefinierten Bereichs liegt, und zur Einstellung des Steuerparameters der Beleuchtungsvorrichtung (110) basierend auf der Dauer, angeordnet ist.

4. Beleuchtungssystem (100) nach Anspruch 1, wobei die Beleuchtungsvorrichtung (110) eine zweite Benutzerschnittstelle (400) umfasst, die zum Empfangen einer zweiten Benutzereingabe innerhalb der vordefinierten Zeitspanne angeordnet ist, und wobei der Prozessor (108) weiter zur Einstellung des Steuerparameters der Beleuchtungsvorrichtung (110) basierend auf der zweiten Benutzereingabe angeordnet ist.

5. Beleuchtungssystem (100) nach Anspruch 4, wobei die zweite Benutzerschnittstelle (400) mindestens eines aus der Gruppe umfasst, die eine berührungsempfindliche Vorrichtung, einen Audiosensor, einen Bewegungssensor und eine oder mehrere Schaltflächen zum Empfangen der zweiten Benutzereingabe umfasst.

6. Beleuchtungssystem (100) nach einem der vorstehenden Ansprüche, wobei die Steuerungsvorrichtung (102) weiter einen Bewegungsdetektor (300) umfasst, der zur Erfassung einer Bewegung (302) der Steuerungsvorrichtung (102) angeordnet ist, und wobei der Prozessor (108) weiter zur Einstellung des Parameters der Beleuchtungsvorrichtung (110) basierend auf der erfassten Bewegung (302) angeordnet ist.

7. Beleuchtungssystem (100) nach einem der vorstehenden Ansprüche, wobei die erste Benutzerschnittstelle (104) weiter zum Empfangen einer weiteren Benutzereingabe zur Einstellung der vordefinierten Zeitspanne angeordnet ist, und wobei der Prozessor (108) weiter zur Einstellung der vordefinierten Zeitspanne basierend auf der weiteren Benutzereingabe angeordnet ist.

8. Beleuchtungssystem (100) nach einem der vorstehenden Ansprüche, wobei der Näherungsdetektor (106) einen Positionsdetektor umfasst, der zur Erfassung von Positionsinformationen der Steuerungsvorrichtung (102) und der Beleuchtungsvorrichtung (110) angeordnet ist, wobei er dadurch die Näherung (114) zwischen der Steuerungsvorrichtung (102) und der Beleuchtungsvorrichtung (110) bestimmt.

9. Beleuchtungssystem (100) nach einem der Ansprüche 1 bis 8, wobei die Steuerungsvorrichtung (102) weiter den Näherungsdetektor (106) umfasst.

10. Beleuchtungssystem (100) nach einem der Ansprüche 1 bis 9, wobei die Steuervorrichtung (102) weiter den Prozessor (108) umfasst.

11. Beleuchtungssystem (100) nach einem der Ansprüche 1 bis 9, wobei die Beleuchtungsvorrichtung (110) weiter den Prozessor (108) umfasst.

12. Beleuchtungssystem (100) nach einem der Ansprüche 1 bis 8, wobei die Beleuchtungsvorrichtung (110) den Näherungsdetektor (106) und den Prozessor (108) umfasst.

13. Verfahren (500) zur Steuerung der Beleuchtungsvorrichtung (110) durch eine Steuervorrichtung (102), wobei das Verfahren (500) die folgenden Schritte umfasst:
- Empfangen (502) einer ersten Benutzereingabe, wobei sich die erste Benutzereingabe auf eine Einstellung eines Steuerparameters der Beleuchtungsvorrichtung (110) bezieht, wobei der Steuerparameter eine Farbe, Helligkeit und/oder eine Form eines Lichtstrahls der Beleuchtungsvorrichtung und/oder eine Ausrichtung der Beleuchtungsvorrichtung ist,
- Erfassung (504) einer Näherung zwischen der Steuervorrichtung (102) und der Beleuchtungsvorrichtung (110) und
**gekennzeichnet durch**:
- Einstellung (506) des Steuerparameters der Beleuchtungsvorrichtung (110) basierend auf der ersten Benutzereingabe nur dann, wenn die Steuervorrichtung (102) innerhalb eines vordefinierten Zeitabschnitts nach Empfangen der ersten Benutzereingabe innerhalb eines vordefinierten Näherungsbereiches (114) der Beleuchtungsvorrichtung (110) nach Empfangen der Benutzereingabe gebracht worden ist, wobei die vordefinierte Zeitspanne so bemessen ist, dass ein Benutzer die Steuervorrichtung innerhalb des vordefinierten Näherungsbereiches (114) bringen kann.

## Revendications

1. Système d'éclairage (100) pour commander un dispositif d'éclairage (110) par un dispositif de commande (102), le système d'éclairage (100) comprenant :
- le dispositif de commande (102) comprenant une première interface utilisateur (104) disposée pour recevoir une première entrée utilisateur, dans lequel la première entrée utilisateur se rapporte à un ajustement d'un paramètre de commande du dispositif d'éclairage (110), dans lequel le paramètre de commande est une couleur, une luminosité et/ou une forme d'un faisceau de la lumière du dispositif d'éclairage et/ou une orientation du dispositif d'éclairage,
- le dispositif d'éclairage (110) comprenant au moins une source lumineuse (112),
- un détecteur de proximité (106) disposé pour détecter une proximité (114) entre le dispositif de commande (102) et le dispositif d'éclairage (110), et
**caractérisé par** :
- un processeur (108) disposé pour ajuster le paramètre de commande du dispositif d'éclairage (110) sur la base de la première entrée utilisateur uniquement lorsque le dispositif de commande (102) a été amené au sein d'une plage de proximité prédéfinie (114) du dispositif d'éclairage (110) après réception de l'entrée utilisateur au sein d'une période de temps prédéfinie après réception de la première entrée utilisateur, la période de temps prédéfinie étant telle qu'elle permet à un utilisateur d'amener le dispositif de commande au sein de la plage de proximité prédéfinie (114).

2. Système d'éclairage (100) selon la revendication 1, dans lequel le détecteur de proximité (106) est en outre disposé pour déterminer une distance (200) entre le dispositif de commande (102) et le dispositif d'éclairage (110), et dans lequel le processeur (108) est en outre disposé pour ajuster le paramètre de commande du dispositif d'éclairage (110) sur la base de la distance déterminée (200).

3. Système d'éclairage (100) selon la revendication 2, dans lequel le processeur (108) est en outre disposé pour déterminer une durée pendant laquelle la distance déterminée (200) se trouve au sein d'une plage prédéfinie, et pour ajuster le paramètre de commande du dispositif d'éclairage (110) sur la base de la durée.

4. Système d'éclairage (100) selon la revendication 1, où le dispositif d'éclairage (110) comprend une seconde interface utilisateur (400) disposée pour recevoir une seconde entrée utilisateur au sein de la période de temps prédéfinie, et dans lequel le processeur (108) est en outre disposé pour ajuster le paramètre de commande du dispositif d'éclairage (110) sur la base de la seconde entrée utilisateur.

5. Système d'éclairage (100) selon la revendication 4, dans lequel la seconde interface utilisateur (400) comprend au moins une parmi le groupe comprenant un dispositif tactile, un capteur audio, un capteur de mouvement et un ou plusieurs boutons pour recevoir la seconde entrée utilisateur.

6. Système d'éclairage (100) selon l'une quelconque des revendications précédentes, dans lequel le dispositif de commande (102) comprend en outre un détecteur de mouvement (300) disposé pour détecter un mouvement (302) du dispositif de commande (102), et dans lequel le processeur (108) est en outre disposé pour ajuster le paramètre du dispositif d'éclairage (110) sur la base du mouvement détecté (302).

7. Système d'éclairage (100) selon l'une quelconque des revendications précédentes, dans lequel la première interface utilisateur (104) est en outre disposée pour recevoir une entrée utilisateur supplémentaire pour ajuster la période de temps prédéfinie, et dans lequel le processeur (108) est en outre disposé pour définir la période de temps prédéfinie sur la base de l'entrée utilisateur supplémentaire.

8. Système d'éclairage (100) selon l'une quelconque des revendications précédentes, dans lequel le détecteur de proximité (106) comprend un détecteur de position disposé pour détecter des informations de position du dispositif de commande (102) et du dispositif d'éclairage (110), ce qui permet de déterminer la proximité (114) entre le dispositif de commande (102) et le dispositif d'éclairage (110).

9. Système d'éclairage (100) selon l'une quelconque des revendications 1 à 8, dans lequel le dispositif de commande (102) comprend en outre le détecteur de proximité (106).

10. Système d'éclairage (100) selon l'une quelconque des revendications 1 à 9, dans lequel le dispositif de commande (102) comprend en outre le processeur (108).

11. Système d'éclairage (100) selon l'une quelconque des revendications 1 à 9, dans lequel le dispositif d'éclairage (110) comprend en outre le processeur (108).

12. Système d'éclairage (100) selon l'une quelconque des revendications 1 à 8, dans lequel le dispositif d'éclairage (110) comprend le détecteur de proximité (106) et le processeur (108).

13. Procédé (500) de commande d'un dispositif d'éclairage (110) par un dispositif de commande (102), le procédé (500) comprenant les étapes consistant à :
- recevoir (502) une première entrée utilisateur, dans lequel la première entrée utilisateur se rapporte à un ajustement d'un paramètre de commande du dispositif d'éclairage (110), dans lequel le paramètre de commande est une couleur, une luminosité et/ou une forme d'un faisceau de la lumière du dispositif d'éclairage et/ou une orientation du dispositif d'éclairage,
- détecter (504) une proximité entre le dispositif de commande (102) et le dispositif d'éclairage (110), et
**caractérisé par** :
- l'ajustement (506) du paramètre de commande du dispositif d'éclairage (110) sur la base de la première entrée utilisateur uniquement lorsque le dispositif de commande (102) a été amené au sein d'une plage de proximité prédéfinie (114) du dispositif d'éclairage (110) après réception de l'entrée utilisateur au sein d'une période de temps prédéfinie après réception de la première entrée utilisateur, la période de temps prédéfinie étant telle qu'elle permet à un utilisateur d'amener le dispositif de commande au sein de la plage de proximité prédéfinie (114).
